# FASCICULE DE BREVET EUROPEEN

(11) **EP 0 763 465 B1**
(45) Date de publication et mention de la délivrance du brevet: **18.08.1999**
(21) Numéro de dépôt: 96401948.3
(22) Date de dépôt: 12.09.1996
(51) Int. Cl.: B64C 13/50, G05D 1/00

(54) **Procédé et dispositif de commande de la gouverne de direction d'un aeronef**
Verfahren und Vorrichtung zum Betrieb eines Seitenruders eines Flugzeuges
Method and device for operating an aircraft rudder

(30) Priorité: 15.09.1995 FR 9510847
(43) Date de publication de la demande: 19.03.1997
(73) Titulaire: AEROSPATIALE Société Nationale Industrielle, 75781 Paris Cédex 16 (FR)
(72) Inventeur: Gautier, Jean-Pierre, 31000 Toulouse (FR); Ortega, Jean-Marc, 31700 Blagnac (FR)
(74) Mandataire: Dubois-Chabert, Guy

(56) Documents cités:
- FR-A- 2 603 865
- FR-A- 2 603 866
- FR-A- 2 604 685

## Description

### Domaine technique de l'invention

La présente invention concerne un procédé et un dispositif de commande de la gouverne de direction d'un aéronef.

L'invention concerne plus précisément un dispositif de commande électrique destiné à des avions de transport qui satisfasse simultanément aux exigences de précision, de fiabilité et de légèreté existant pour ce type d'appareils.

### Etat de la technique antérieure

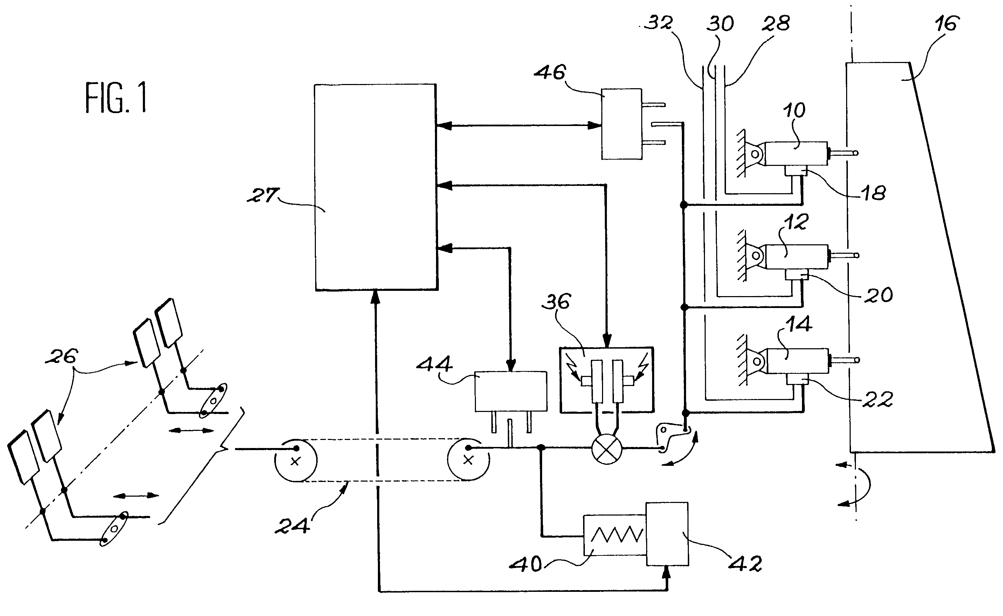

La figure 1 illustre de façon schématique un dispositif de commande connu du type équipant à l'heure actuelle des avions de marque AIRBUS (A320, A340). Ce dispositif comprend un ensemble de trois servocommandes 10, 12, 14 pour actionner une gouverne de direction repérée avec la référence 16. Les trois servocommandes sont du type hydromécanique et comportent chacune une entrée de commande mécanique 18, 20, 22. Leur commande est assurée par une timonerie 24 qui agit sur les entrées de commande mécanique 18, 20, 22 et qui est actionnable à partir de pédales 26 (palonnier). Chaque servocommande 10, 12, 14 est par ailleurs alimentée respectivement par un circuit hydraulique différent 28, 30, 32, fournissant l'énergie nécessaire au mouvement de la gouverne 16.

Le dispositif de commande comporte en outre une unité de calcul 27 apte à élaborer des ordres de commande tels que des ordres d'amortissement de lacet par exemple. Ces ordres sont ajoutés aux ordres de pilotage en provenance des pédales 26 au moyen d'un système de vérins électrohydrauliques 36. L'addition des ordres de commande de l'unité de calcul à ceux en provenance des pédales est effectuée mécaniquement et de telle manière que les mouvements des vérins 36 ne soient pas retransmis vers les pédales.

Un dispositif 40 pour la sensation artificielle d'effort est prévu pour restituer sur les pédales un effort fonction de leur braquage, et ainsi faciliter le pilotage. Ce dispositif 40, comporte un actionneur 42 dit de "trim", piloté par l'unité de calcul 27, pour le positionnement de la gouverne 16 dans une position prédéterminée dite position à "zéro d'effort" lorsque les pédales 26 sont lâchées par le pilote.

Des dispositifs 44 et 46, pilotés par l'unité de calcul 27, sont prévus pour limiter le débattement des pédales et/ou de la gouverne.

Avec un dispositif de commande conforme à la figure 1, les trois servocommandes 10, 12 et 14 sont pressurisés simultanément à partir des circuits hydrauliques 28, 30, 32 et les servocommandes sont commandées en parallèle pour manoeuvrer la gouverne de direction 16.

Comme indiqué ci-dessus, les vérins électrohydrauliques 36 exercent des ordres de commande et notamment les ordres d'amortissement de lacet par l'intermédiaire d'une timonerie mécanique pour piloter l'entrée mécanique des servocommandes.

Ainsi, les frottements et les éventuelles déformations du système de transmission mécanique influent défavorablement sur la précision des commandes.

Un deuxième type connu de dispositif de commande de la gouverne permet de s'affranchir de cet inconvénient en utilisant trois servocommandes à entrée électrique. Des signaux de commande électriques sont directement appliqués à l'entrée des servocommandes. Ainsi, en l'absence de système mécanique de transmission des commandes, il est possible d'actionner la gouverne avec une précision notablement accrue.

Toutefois, un tel dispositif ne comporte pas de secours mécanique en cas de panne électrique entraînant la défaillance de toutes les commandes.

Le document (1) FR-A-2 603 865, décrit enfin un dispositif de commande de la gouverne de direction d'un avion, équipé de deux servocommandes électrohydrauliques avec une entrée électrique et d'une servocommande hydromécanique avec une entrée mécanique. Dans ce dispositif, chaque servocommande est alimentée par un circuit hydraulique qui lui est propre.

Les servocommandes électrohydrauliques reçoivent des ordres de commande électriques délivrés par des calculateurs qui leurs sont associés.

Par ailleurs, une seule des trois servocommandes est actionnée à la fois pour manoeuvrer la gouverne. Selon une hiérarchie prédéterminée, en cas de défaillance du système de commande de l'une des servocommandes, le système de commande de la servocommande de priorité suivante est déclenché. Le système de commande avec la servocommande hydromécanique présente la priorité de déclenchement la plus faible. Il constitue ainsi un secours mécanique en cas de panne électrique des autres systèmes de commande.

On peut noter par ailleurs que dans les dispositifs connus de commande de la gouverne de direction, les pompes de pressurisation des circuits hydrauliques alimentant les servocommandes, sont entraînées ou alimentées en énergie par les propulseurs de l'aéronef. Pour des raisons de sécurité, les pompes des circuits hydrauliques des différentes servocommandes sont entraînées par au moins un propulseur. Généralement, l'un des circuits hydrauliques peut être entraîné par au moins deux propulseurs.

Une défaillance ou l'arrêt de l'un des propulseurs peut entraîner une perte de pression dans le circuit hydraulique qui lui est associé et rend inopérante la servocommande qui y correspond.

La défaillance de l'un des propulseurs, particulièrement dans le cas d'un avion où les propulseurs sont fixés sur les ailes, peut entraîner non seulement une perte de pression dans le circuit hydraulique associé mais provoque surtout un déséquilibre de la poussée. Celle-ci n'est plus symétrique.

Ce déséquilibre peut être compensé en manoeuvrant la gouverne de direction de façon appropriée.

Lorsque le dispositif de commande de la gouverne comporte trois servocommandes à entrée électrique ou trois servocommandes à entrée mécanique, pilotées en parallèle, la manoeuvre de la gouverne, et par conséquent l'équilibrage de l'appareil restent possibles en actionnant les deux servocommandes qui ne sont pas concernées par la perte de pression du circuit hydraulique associé au propulseur en panne.

Avec un dispositif conforme au document (1), en cas de panne d'un propulseur entraînant une chute de pression dans un circuit hydraulique d'une servocommande électrohydraulique la manoeuvre de la gouverne est effectuée soit, avec la servocommande électrohydraulique restant en état de fonctionner, soit éventuellement, avec la servocommande hydromécanique.

Toutefois, lorsqu'il est nécessaire de compenser un déséquilibre de la poussée des propulseurs, et en particulier en phase de décollage, les efforts à exercer sur la gouverne de direction sont maximaux. Ces efforts conditionnent donc la taille des servocommandes à utiliser.

Ainsi, comme il n'est pas possible d'actionner simultanément la gouverne avec une servocommande hydromécanique et une servocommande électrohydraulique, sur des appareils équipés d'un dispositif de commande de la gouverne de direction conforme au document (1), les servocommandes, et les circuits hydrauliques associés, doivent être dimensionnées de telle sorte que chaque servocommande soit en mesure d'exercer sur la gouverne les efforts maximaux nécessaires à la compensation d'une poussée dissymétrique en cas de panne de l'un des propulseurs.

Une telle mesure conduit à l'augmentation de la taille et par conséquent du poids des servocommandes et des circuits hydrauliques correspondants.

Un but de la présente invention est donc de proposer un dispositif de commande de la gouverne de direction d'un aéronef, qui soit d'un poids réduit par rapport au dispositif du document (1), et qui permette la manoeuvre de la gouverne même dans les cas les plus défavorables de panne de propulseur provoquant un déséquilibre de la poussée de l'aéronef.

Un autre but est de proposer un dispositif restant opérationnel même en cas de défaillance des systèmes électriques de contrôle des servocommandes.

Un autre but encore de l'invention est de proposer un dispositif de commande qui permette la manoeuvre de la gouverne de direction avec une précision notablement accrue par rapport aux dispositifs à commande mécanique.

Un but de l'invention est enfin de proposer un procédé de commande perfectionné de la gouverne de direction qui satisfasse à des exigences de fiabilité et de sécurité sévères

### Exposé de l'invention

Pour atteindre ces buts, l'invention a plus précisément pour objet un dispositif de commande de la gouverne de direction d'un aéronef équipé d'au moins deux propulseurs, comportant au moins deux servocommandes, ayant chacune au moins une entrée de commande électrique, et un système de pilotage électrique des servocommandes apte à occuper un premier état correspondant à un fonctionnement normal des propulseurs dans lequel au moins l'une des servocommandes actionne la gouverne. Selon l'invention au moins l'une des servocommandes, dite servocommande mixte, comporte en outre une entrée de commande mécanique, et le système de pilotage électrique des servocommande est apte à occuper un deuxième état, correspondant à une panne d'un propulseur, dans lequel au moins deux des servocommandes actionnent simultanément la gouverne, et un troisième état correspondant à une panne électrique, dans lequel, la servocommande mixte, pilotée à partir de l'entrée de commande mécanique, actionne la gouverne.

Grâce à l'invention, la gouverne peut être simultanément actionnée avec deux servocommandes, notamment en cas de panne d'un propulseur. Il est ainsi possible d'appliquer à la gouverne les efforts maximaux requis pour équilibrer le vol c'est-à-dire pour compenser la poussée dissymétrique des propulseurs.

Le dispositif de l'invention permet en outre de disposer de la sécurité d'une commande mécanique en cas de panne électrique.

Selon un aspect de l'invention, le système de pilotage électrique des servocommandes peut comprendre une unité de calcul associée respectivement à chaque servocommande.

Chaque unité de calcul peut être équipée d'un seul, mais préférentiellement d'une pluralité de calculateurs redondants. Ces calculateurs élaborent des ordres de pilotage, tels que par exemple, des ordres d'amortissement de lacet, dirigés vers les servocommandes. Les calculateurs commandent aussi les modes de fonctionnement des servocommandes qui sont expliqués plus en détail dans la suite de la description.

Selon un autre aspect de l'invention, les servocommandes à entrée électrique peuvent respectivement comporter un vérin hydraulique avec deux chambres, et une servovalve reliée à un circuit hydraulique pour délivrer aux chambres un débit de fluide hydraulique fonction d'un ordre électrique en provenance de l'unité de calcul associée à la servocommande.

Selon un aspect de l'invention, les servocommandes à entrée de commande électrique et dépourvues de commande mécanique peuvent fonctionner selon deux modes.

Un premier mode est le mode dit "actif électrique". Une électrovanne de la servocommande est excitée par un calculateur chargé du pilotage de la servocommande et les chambres du vérin sont mises en communication avec la servovalve. Celle-ci délivre alors un débit de fluide hydraulique fonction des ordres électriques fournis par un calculateur du système électrique de pilotage.

Un deuxième mode est le mode dit amorti. Dans ce mode de fonctionnement, l'électrovanne est désexcitée par le calculateur chargé du pilotage et les chambres du vérin de la servocommande sont mutuellement mis en communication à travers un restricteur. Ce restricteur freine le passage du fluide hydraulique d'une chambre du vérin à l'autre et permet ainsi d'amortir les mouvements de la gouverne. Il est possible de prévoir un mode amorti avec plusieurs degrés d'amortissement. Un amortissement léger permet de n'affecter que très faiblement les performances de l'actionnement de la gouverne, en cas de fonctionnement normal de l'aéronef. En cas de panne, un amortissement plus important peut être envisagé pour les servocommandes qui ne participent pas à l'actionnement de la gouverne.

Selon un mode de mise en oeuvre de l'invention, le dispositif peut comporter trois servocommandes à entrée électrique dont au moins une servocommande mixte. Les servocommandes à entrée mixte peuvent également fonctionner selon les modes "actif" "électrique" et "amorti". Elles peuvent en outre fonctionner selon un mode "actif mécanique". Selon une première réalisation de la servocommande à commande mixte, celle-ci comprend une première électrovanne pilotée par l'unité de calcul qui y est respectivement associée, la première électrovanne étant apte à occuper un état excité correspondant à un mode de fonctionnement dit "actif électrique" du vérin dans lequel les chambres du vérin sont mises en communication avec la servovalve, et un état désexcité. La servocommande mixte comporte également une deuxième et une troisième électrovannes pilotées respectivement par les unités de calcul associées aux deux autres servocommandes du dispositif, et aptes à occuper alternativement un état excité et un état désexcité, les chambres du vérin de la servocommande mixte étant mises en communication entre elles dans un mode de fonctionnement dit "amorti" du vérin lorsque la première électrovanne occupe un état désexcité et qu'au moins l'une des deuxième et troisième électrovannes occupe un état excité, et les chambres du vérin de la servocommande mixte étant mises en communication avec un distributeur relié à l'entrée mécanique de la servocommande dans un mode de fonctionnement dit "actif mécanique" lorsque les première, deuxième et troisième électrovannes occupent un état désexcité.

Lorsque les chambres du vérin sont en communication avec la servovalve, celle-ci leur délivre un débit de fluide hydraulique fonction d'ordres électriques de commande élaborés par le système électrique de pilotage et appliqués à la servovalve. De même, lorsque les chambres du vérin sont en communication avec le distributeur, celui-ci leur délivre un débit de fluide hydraulique fonction des ordres mécaniques appliqués sur l'entrée de commande mécanique.

Selon une autre réalisation de la servocommande mixte, celle-ci peut aussi comporter une première, une deuxième et une troisième électrovannes pilotées respectivement par une unité de calcul associée à ladite servocommande mixte et par les unités de calcul associées aux deux autres servocommandes du dispositif, aptes à occuper chacune alternativement un état excité et un état désexcité, la servocommande fonctionnant selon un mode dit "amorti", dans laquelle les chambres du vérin sont mises en communication, lorsqu'au moins l'une des deuxième et troisième électrovanne est dans un état excité ; la servocommande fonctionnant selon un mode dit "actif électrique" dans lequel les chambres du vérin sont mises en communication avec la servovalve, et dans lequel elle est pilotée par l'intermédiaire de l'entrée de commande électrique, lorsque la première électrovanne est excitée et que les deuxième et troisième électrovannes sont désexcitées, et la servocommande fonctionnant selon un mode dit "actif mécanique" dans lequel les chambres du vérin sont mises en communication avec la servovalve et dans lequel la servocommande est pilotée par l'intermédiaire de l'entrée de commande mécanique, lorsque les première, deuxième et troisième électrovannes sont dans un état désexcité.

Selon un aspect de l'invention chaque circuit hydraulique peut comporter un système de pressurisation entraîné par au moins un propulseur.

Par ailleurs, le dispositif peut comporter au moins une servocommande avec deux entrées de commande électrique, ladite servocommande présentant une première entrée électrique pour piloter une servovalve et une deuxième entrée électrique pour piloter un système de génération hydraulique intégré et autonome.

Cette génération hydraulique intégrée à la servocommande peut délivrer un débit variable de fluide hydraulique dans les chambres du vérin, en fonction d'ordres électriques de commande élaborés par le système de pilotage, de façon à manoeuvrer la gouverne.

Un tel système de génération hydraulique équipe les servocommandes de type hydrostatique. Il permet d'affranchir le fonctionnement de la servocommande de celui d'un propulseur.

En effet, lorsqu'un circuit hydraulique est pressurisé par une pompe entraînée ou alimentée en énergie par un seul propulseur, la panne de ce propulseur provoque une perte de pression sur ce circuit et rend la servocommande correspondante inopérante. Les servocommandes de type hydrostatique et les servocommandes à deux entrées électriques dont l'une pilote un système de génération hydraulique autonome, restent donc en état de fonctionner même en cas de panne de propulseur.

L'invention concerne également un procédé de pilotage d'un dispositif de commande de la gouverne de direction d'un aéronef équipé d'au moins deux propulseurs, comprenant au moins deux servocommandes à entrée de commande électrique dont au moins l'une, dite servocommande mixte, comporte en outre une entrée de commande mécanique, et un système de pilotage électrique des servocommandes, selon lequel, pour actionner la gouverne :
- on pilote électriquement l'une des servocommandes en cas de fonctionnement normal des propulseurs,
- on pilote électriquement et simultanément au moins deux servocommandes en état de fonctionner en cas de défaillance d'un propulseur, et
- on pilote mécaniquement la servocommande mixte en cas de panne du système de pilotage électrique des servocommandes.

D'autres caractéristiques et avantages de la présente invention ressortiront mieux de la description qui va suivre, en référence aux dessins annexés, donnée à titre purement illustratif et non limitatif.

### Brève description des figures

- la figure 1, déjà décrite, est une représentation schématique simplifiée d'un dispositif de commande de la gouverne de direction d'un aéronef, de type connu,
- la figure 2 est une représentation schématique simplifiée d'un dispositif de commande de la gouverne de direction conforme à un premier mode de mise en oeuvre de l'invention,
- la figure 3 est une représentation schématique simplifiée d'une servocommande à entrée de commande électrique pouvant équiper le dispositif de la figure 2.
- la figure 4 est une représentation schématique simplifiée d'une servocommande mixte pouvant équiper le dispositif de la figure 2,
- la figure 5 est une représentation schématique simplifiée d'un autre type de servocommande mixte pouvant équiper le dispositif de la figure 2.
- la figure 6 est une représentation schématique simplifiée d'un dispositif de commande de la gouverne de direction conforme à un deuxième mode de mise en oeuvre de l'invention ;
- la figure 7 est une représentation schématique simplifiée d'un dispositif de commande de la gouverne de direction conforme à un troisième mode de mise en oeuvre de l'invention.

### Description de modes de mise en oeuvre de l'invention

Dans la description qui suit, des éléments identiques ou similaires des différentes figures portent les mêmes référence afin d'en faciliter la compréhension.

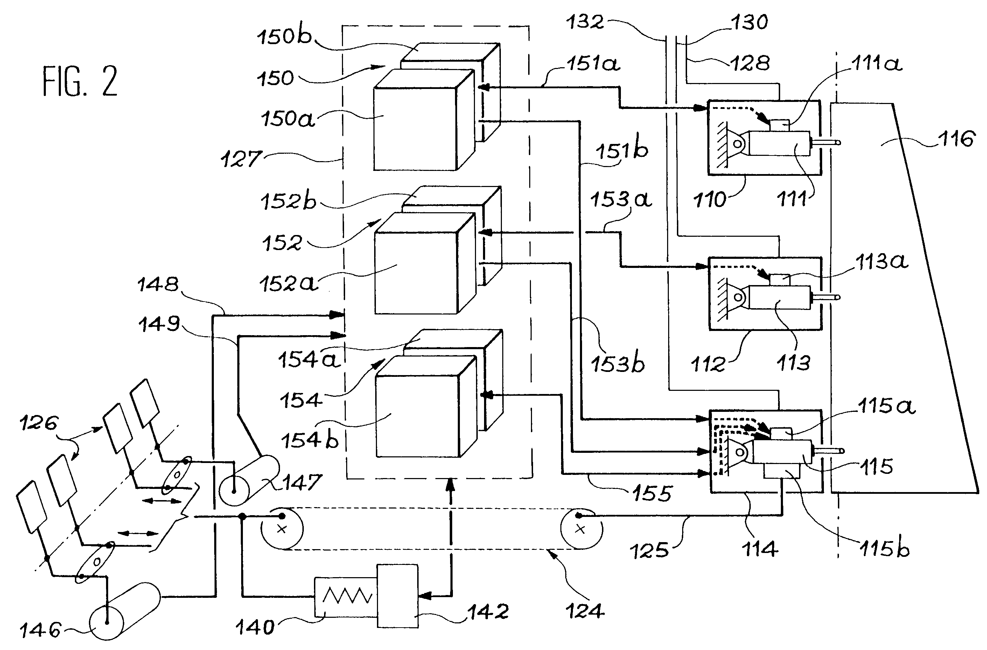

La figure 2 montre de façon simplifiée une première réalisation du dispositif de commande de gouverne selon l'invention.

Celui-ci comporte trois servocommandes 110, 112 et 114 équipées de vérins 111, 113 et 115 pour manoeuvrer une gouverne de direction 116. Les servocommandes 110 et 112 sont des servocommandes avec des entrées de commande électriques 111a et 113a et la servocommande 114 est une servocommande mixte présentant une entrée de commande électrique 115a et une entrée de commande mécanique 115b. Les servocommandes sont du type "simple corps", c'est-à-dire que chaque servocommande est reliée à un unique circuit hydraulique et ne comporte qu'un seul vérin.

Le vérin de chacune des servocommandes est alimenté par un circuit hydraulique différent. Les circuits hydrauliques des vérins 111, 113 et 115 sont partiellement représentés et portent respectivement les références 128, 130 et 132.

Les circuits hydrauliques sont équipés de pompes de pressurisation (non représentées) qui sont entraînées ou alimentées en énergie respectivement par différents propulseurs de l'aéronef.

Un système de pilotage électrique des servocommandes avec la référence générale 127 comporte trois unités de calcul 150, 152 et 154 pour piloter respectivement les servocommandes 110, 112 et 114. Chaque unité de calcul peut comporter un calculateur ou une pluralité de calculateurs redondants, respectivement 150a, 150b, 152a, 152b, 154a, 154b, fonctionnant en parallèle pour augmenter la fiabilité des unités de calcul.

Les unités de calcul 150, 152 et 154 sont respectivement reliées aux servocommandes par des liaisons électriques 151a, 153a et 155, représentées de façon simplifiée, en particulier pour transmettre des signaux de commande sur les entrées de commande électriques 111a, 113a et 115a. Ces signaux de commande intègrent les ordres correspondant à la position des pédales de commande 126 (palonnier) installées au poste de pilotage et des ordres tels que des ordres d'amortissement de lacet élaborés par les calculateurs. Ainsi, les vérins hydrauliques, existant sur des dispositifs connus semblables à la figure 1 (voir référence 36), pour introduire les ordres de commande d'amortissement de lacet sur le système de commande mécanique, sont superflus.

Des liaisons électriques 151a, 151b, 153a, 153b et 155 transmettent des signaux pilotant un mode de fonctionnement des servocommandes.

La position des pédales détectée par des capteurs de position 146, 147, est transmise électriquement au système 127 par des liaisons électriques 148, 149.

La limitation de débattement de la gouverne en fonction des conditions de vol peut être réalisée électriquement dans les calculateurs. Grâce à cette caractéristique, il est possible de simplifier le système de commande mécanique en l'allégeant des dispositifs mécaniques de limitation du débattement des pédales et/ou de la gouverne. Un dispositif de sensation artificielle d'efforts sur les pédales peut être installé, dans ce cas, directement au poste de pilotage.

Un système de timonerie mécanique 124 permet, par ailleurs, par l'intermédiaire d'une transmission débrayable 125, d'appliquer directement les commandes exercées sur les pédales 126 à l'entrée de commande mécanique 115b de la servocommande 115.

Un dispositif de sensation artificielle d'efforts 140 et un actionneur 142 de réglage du zéro d'effort piloté par l'intermédiaire du système de pilotage électrique 127, sont également prévus pour restituer sur les pédales 126 un effort fonction de leur braquage.

En cas de fonctionnement normal des propulseurs et du système 127, les ordres de commande sont transmis électriquement à l'une des servocommandes. L'unité de calcul 150 par exemple, fournit les ordres de commande à la servocommande 110. En cas de défaillance de l'un des propulseurs, deux servocommandes sont actionnées simultanément. Lorsque la panne du propulseur entraîne une perte de pression hydraulique dans le circuit hydraulique de l'une des servocommandes, par exemple la servocommande 110, l'actionnement de la gouverne est assuré par les deux servocommandes 112, 114 dont le circuit hydraulique n'est pas pressurisée à partir du propulseur en panne.

Selon une variante du dispositif de la figure 2, l'une des servocommandes à entrée électrique 110, 112, par exemple la servocommande 112 peut être remplacée par une servocommande de type hydrostatique dite "EHA" (Electro Hydrostatic Actuator), comportant un système de génération hydraulique intégré et autonome. Le circuit hydraulique extérieur 130 est alors éliminé. Ceci permet alors un allégement du dispositif. En cas de panne d'un propulseur entraînant une chute de pression de l'un des circuits hydrauliques 128 ou 132, il reste l'une des servocommandes à circuit hydraulique extérieur 110 ou 114 et la servocommande 112 (EHA) autonome, pour actionner la gouverne.

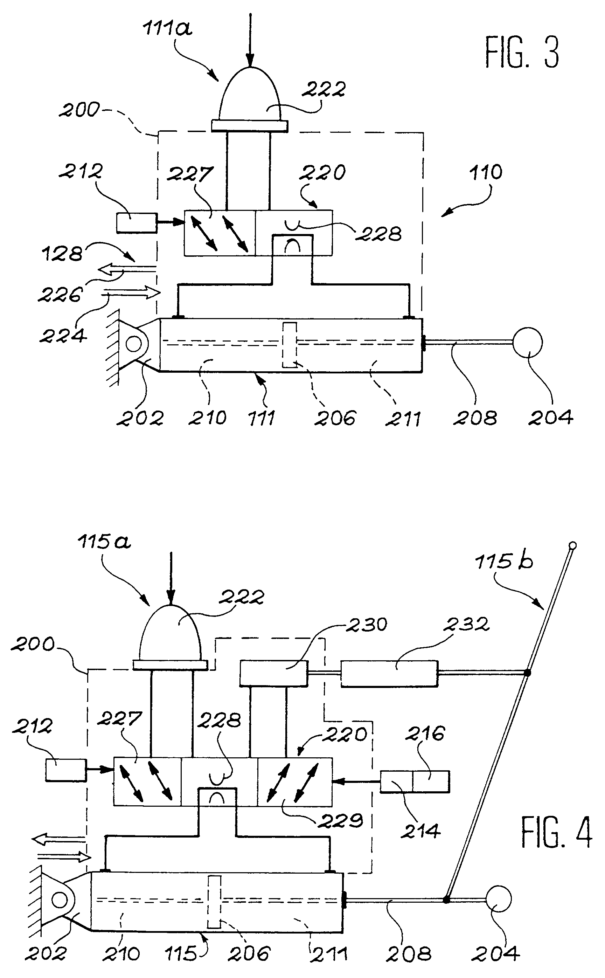

La figure 3 montre de façon schématique les principaux éléments composant une servocommande à entrée de commande électrique, encore appelée servocommande électrohydraulique.

La servocommande repérée avec la référence générale 110 comporte un vérin 111 et un bloc de commande 200 avec une entrée électrique de commande 111a.

Le vérin 111 présente une extrémité 202 reliée à un support fixe relié à la dérive (non représentée) et une extrémité 204 reliée à la gouverne de direction, non représentée. Un piston 206, solidaire d'une tige de piston 208 sépare le cylindre du vérin en deux chambres 210, 211.

Une électrovanne 212 reliée électriquement à une unité de calcul, non représentée, associée à la servocommande, permet de sélectionner un mode de fonctionnement de la servocommande.

Lorsque l'électrovanne est excitée par un signal électrique, un tiroir 220 dit "tiroir de mode" est positionné de manière à mettre en communication les chambres 210 et 211 avec une servovalve 222, par l'intermédiaire d'une portion de double passage 227 du tiroir.

La servovalve 222, reliée électriquement à l'unité de calcul, délivre alors au vérin 111 un débit de fluide hydraulique en fonction des ordres élaborés par l'unité de calcul. La servocommande fonctionne alors dans le mode actif électrique déjà décrit. Le débit de fluide hydraulique est fourni par un circuit hydraulique 128 dont ne sont représentés qu'une arrivée 224 de haute pression et un départ 226 de basse pression.

Lorsque l'électrovanne 212 est désexcitée, en l'absence de signal électrique, le tiroir de mode 220 est positionné de façon à isoler les chambres du vérin de la servovalve 222 et à mettre en communication les chambres 210 et 211 entre-elles, à travers un restricteur 228. Cette position, illustrée sur la figure 3 correspond au fonctionnement de la servocommande selon le mode amorti déjà décrit.

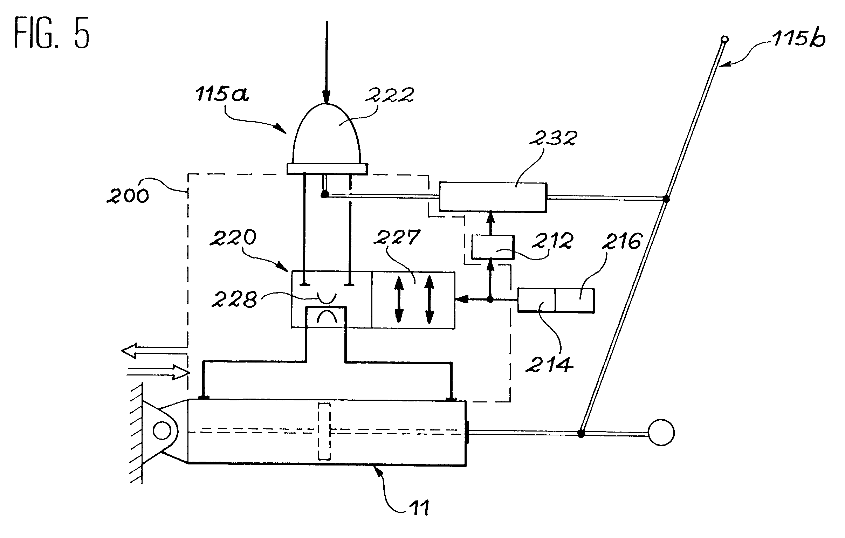

La figure 4 montre de façon schématique une servocommande mixte, telle que la servocommande 114 utilisée dans le dispositif de commande illustré à la figure 2. De nombreux éléments, sont identiques à ceux de la servocommande de la figure 3. Ces éléments portent les mêmes références et on peut donc se reporter à leur sujet, aux explications qui précèdent. Par ailleurs, sur la figure 4, le vérin de la servocommande porte, par analogie avec la figure 2, la référence 115 et les entrées de commande électrique et mécanique portent respectivement les références 115a et 115b.

Le tiroir de mode 220 de la servocommande mixte peut occuper trois positions et est actionné par trois électrovannes 212, 214 et 216 pilotées respectivement par les unités de calcul 154, 152 et 150 visibles à la figure 2.

Lorsque l'électrovanne 212 est excitée, le tiroir 220 occupe une position dans laquelle les chambres 210, 211 sont mises en communication avec la servovalve 222 par l'intermédiaire d'une portion de double passage 227 du tiroir. La servocommande fonctionne alors selon le mode actif électrique déjà décrit.

Lorsque l'électrovanne 212 est désexcitée et que l'une au moins des électrovannes 214 et 216 est excitée, le tiroir de mode occupe une position dans laquelle les chambres 210 et 211 sont mises en communication à travers un restricteur 228 pour un fonctionnement selon le mode amorti. Cette position correspond à la position du tiroir représentée sur la figure 4

Lorsque aucune des électrovannes 212, 214 et 216 n'est excitée, le tiroir de mode occupe une troisième position dans laquelle les chambres 210 et 211 sont mises en communication avec un distributeur 230 par l'intermédiaire d'une portion de double passage 229 du tiroir. Dans cette position, un embrayage 232 est embrayé et relie le distributeur 230 à l'entrée de commande mécanique 115b.

Le distributeur 230 délivre alors au vérin un débit de fluide hydraulique fonction de la commande mécanique appliquée sur l'entrée 115b. La servocommande fonctionne selon le mode actif mécanique. Ce mode est enclenché par défaut en cas de panne électrique, c'est-à-dire quand aucune des électrovannes ne reçoit de signal d'une unité de calcul.

A titre d'exemple, en se reportant à la figure 2 on comprend qu'en cas de panne de la première chaîne électrique 150, 150a, 150b, 151a, 151b, associée à la servocommande 110, l'électrovanne 216 est désexcitée. La deuxième chaîne électrique 152, 152a, 152b, 153a, 153b associée à la servocommande 112 est alors activée pour piloter la servocommande 112.

En cas de panne électrique de cette deuxième chaîne, l'électrovanne 214 est également désexcitée. La troisième chaîne électrique comportant les éléments 154, 154a, 154b, 155 est alors activée pour piloter la servocommande 114.

Enfin, en cas de panne électrique des trois chaînes, les trois électrovannes 212, 214 et 216 sont désexcitées et la commande mécanique de la servocommande mixte est automatiquement activée.

En cas de fonctionnement normal du dispositif de commande de la gouverne de direction, l'embrayage 232 est débrayé. Ceci permet d'éviter que les ordres tels que les ordres de stabilisation de lacet délivrés par les calculateurs ne soient mécaniquement retransmis sur les pédales. Selon une variante de réalisation, pour éviter que les ordres ne soient retransmis sur les pédales, il est possible aussi d'équiper l'entrée de commande mécanique d'un système de bielle à ressort, ou à came, capable d'absorber toute la course de la servocommande.

La figure 5 montre de façon schématique un autre type de servocommande mixte utilisable dans le dispositif de l'invention.

La servocommande comporte un tiroir de mode 220 avec seulement deux positions. Si l'au moins l'une des deux électrovannes 214 et 216, pilotées respectivement par les unités de calcul 152 et 150 visibles à la figure 2, sont excitées, le tiroir de mode se positionne pour mettre mutuellement en communication les chambres 210, 211 du vérin par l'intermédiaire du restricteur 228, et la servocommande fonctionne selon le mode amorti. L'excitation de l'électrovanne 212 permet en outre de mettre l'embrayage 232 dans un état débrayé qui rend la servovalve 222 indépendante de la commande mécanique 115b.

Lorsque les électrovannes 214 et 216 sont désexcitées, le tiroir de mode 220 se positionne pour mettre les chambres du vérin 115 en communication avec la servovalve 222 à travers une portion à double passage 227 du tiroir. La servocommande est alors en mesure de fonctionner soit en mode actif électrique, soit en mode actif mécanique.

Le mode actif électrique est activé si l'électrovanne 212 est excitée. La commande mécanique est alors débrayée et immobilisée et l'entrée de commande électrique 115a de la servovalve est pilotée.

Lorsque l'électrovanne 212 est désexcitée, soit intentionnellement, soit à la suite de pannes électriques telles que déjà décrites, la commande mécanique est accouplée à la servovalve, par l'intermédiaire de l'embrayage 232 et la servovalve délivre aux chambres du vérin un débit fonction de l'entrée de commande mécanique 115b. Ceci correspond donc au mode actif mécanique.

Dans l'application envisagée, et par construction, on ne prévoit pas de piloter la servovalve simultanément par l'entrée de commande mécanique et par l'entrée de commande électrique.

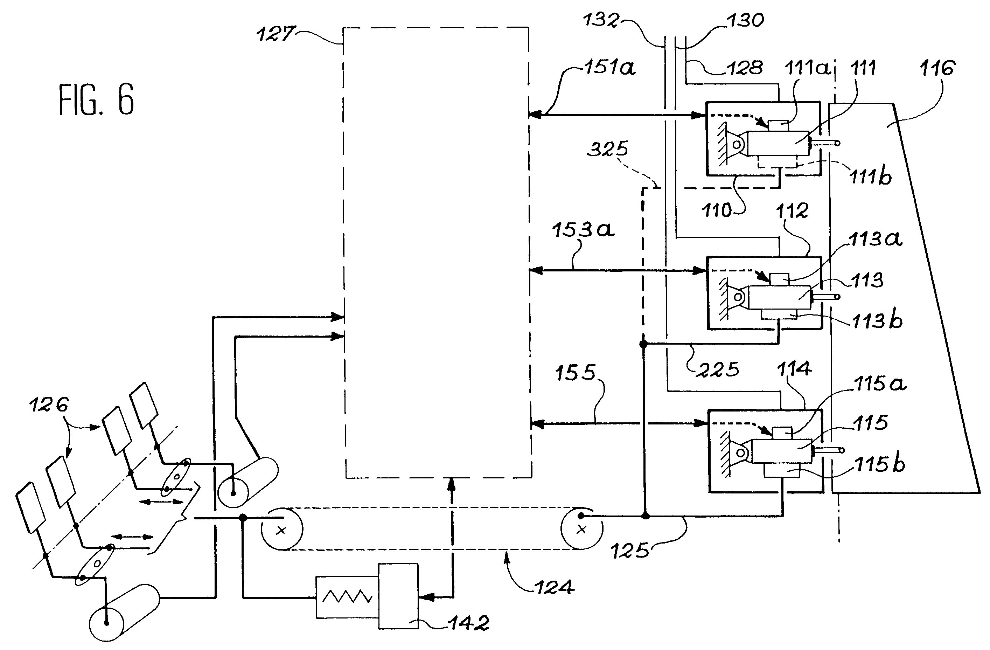

La figure 6 montre une variante de mise en oeuvre de l'invention selon laquelle le dispositif de commande est équipé de deux ou de trois servocommandes mixtes.

Les servocommandes 110, 112 et 114 comportent dans l'exemple illustré, respectivement des entrées de commande électriques 111a, 113a et 115a, reliées à l'unité de pilotage électrique 127, et des entrées de commande mécaniques (111b), 113b, 115b reliées à la timonerie 124 par l'intermédiaire de transmissions (325), 225 et 125 respectivement.

Le caractère redondant de cette configuration apporte une sécurité de fonctionnement supplémentaire.

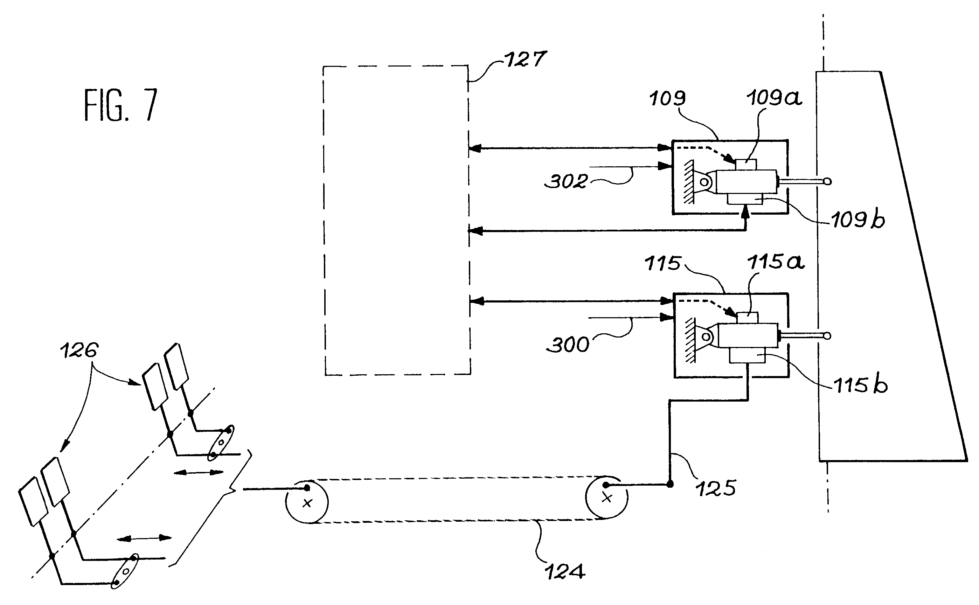

La figure 7 montre une autre variante de mise en oeuvre de l'invention dans laquelle seules deux servocommandes sont utilisées.

Le dispositif comporte une servocommande mixte 115 avec une entrée de commande électrique 115a reliée à un système de pilotage électrique 127, et une entrée de commande mécanique 115b reliée aux pédales 126 par une timonerie 124 et une transmission 125. La servocommande 115 est alimentée par un circuit hydraulique 300 pressurisé à partir de deux propulseurs différents de l'aéronef.

La deuxième servocommande porte la référence 109. Il s'agit d'une servocommande dite "EBHA" (Electrical Back-Up Hydraulic Actuator) avec deux entrées électriques 109a et 109b reliées également au système de pilotage 127.

L'entrée électrique 109a permet d'envoyer des ordres de commande à une servovalve (non représentée) du type déjà décrit et alimentée par un circuit hydraulique 302. La deuxième entrée électrique 109b permet d'envoyer des ordres de commande à un système de génération hydraulique intégré et autonome pour manoeuvrer la gouverne.

En cas de panne de l'un des propulseurs, le circuit hydraulique 300 reste pressurisé par le deuxième propulseur et la servocommande 115 reste en état de fonctionner. De même, en cas de panne d'un propulseur entraînant une perte de pression sur le circuit hydraulique 302, la servocommande 109 reste opérationnelle grâce à son système de génération hydraulique intégré, piloté alors sur l'entrée 109b.

Ainsi, ces deux servocommandes peuvent actionner la gouverne en cas de panne de l'un des propulseurs.

Cette réalisation permet de faire l'économie d'une servocommande et éventuellement d'un circuit hydraulique, par rapport à la réalisation de la figure 2, par exemple. Un gain en poids important peut ainsi être obtenu.

## Revendications

1. Dispositif de commande de la gouverne (116) de direction d'un aéronef équipé d'au moins deux propulseurs, comportant au moins deux servocommandes (110, 112, 114), ayant chacune au moins une entrée de commande électrique (111a, 113a, 115a), et un système (127) de pilotage électrique des servocommandes apte à occuper un premier état correspondant à un fonctionnement normal des propulseurs dans lequel au moins l'une des servocommandes actionne la gouverne, caractérisé en ce qu'au moins l'une des servocommandes (114), dite servocommande mixte, comporte en outre une entrée de commande mécanique (115b), et en ce que le système de pilotage électrique des servocommandes est apte à occuper un deuxième état, correspondant à une panne d'un propulseur, dans lequel au moins deux des servocommandes actionnent simultanément la gouverne (116), et un troisième état correspondant à une panne électrique, dans lequel, la servocommande mixte (114), pilotée à partir de l'entrée de commande mécanique, actionne la gouverne.

2. Dispositif selon la revendication 1, caractérisé en ce que le système de pilotage électrique (127)des servocommandes comprend une unité de calcul (150, 152, 154) associée respectivement à chaque servocommande (110, 112, 114).

3. Dispositif de commande selon la revendication 2, caractérisé en ce que les servocommandes à entrée électrique (110, 112, 114) comportent respectivement un vérin hydraulique (111, 113, 115) avec deux chambres (210, 211), une servovalve (222) reliée à un circuit hydraulique (128, 130, 132) pour délivrer aux chambres un débit de fluide hydraulique fonction d'un ordre électrique en provenance de l'unité de calcul associée à la servocommande.

4. Dispositif selon la revendication 3, caractérisé en ce qu'il comporte trois servocommandes à entrée électrique dont au moins une servocommande mixte.

5. Dispositif selon la revendication 4, caractérisé en ce que la servocommande mixte comporte une première électrovanne (212) pilotée par l'unité de calcul (154) qui y est respectivement associée, la première électrovanne étant apte à occuper un état excité correspondant à un mode de fonctionnement dit "actif électrique" dans lequel les chambres (210, 211) du vérin (115) sont mises en communication avec la servovalve (222), et un état désexcité, la servocommande mixte comportant également une deuxième et une troisième électrovannes (214, 216) pilotées respectivement par les unités de calcul (150, 152) associées aux deux autres servocommandes du dispositif, et aptes à occuper, chacune, alternativement un état excité et un état désexcité, les chambres du vérin (210, 211) de la servocommande mixte étant mises en communication entre elles dans un mode de fonctionnement dit "amorti" du vérin lorsque la première électrovanne occupe un état désexcité et qu'au moins une des deuxième et troisième électrovannes occupe un état excité, et les chambres du vérin de la servocommande mixte étant mises en communication avec un distributeur (230) relié à l'entrée mécanique (115b) de la servocommande dans un mode de fonctionnement dit "actif mécanique" lorsque les première (212), deuxième (214) et troisième (216) électrovannes occupent un état désexcité.

6. Dispositif selon la revendication 4, caractérisé en ce que la servocommande mixte comporte une première, une deuxième et une troisième électrovannes (212, 214, 216) pilotées respectivement par une unité de calcul (154) associée à ladite servocommande mixte (114) et par des unités de calcul (152, 150) associées aux deux autres servocommandes du dispositif, et aptes à occuper chacune alternativement un état excité et un état désexcité, la servocommande fonctionnant selon un mode dit "amorti", dans laquelle les chambres (210, 211) du vérin sont mises en communication mutuelle, lorsqu'au moins l'une des deuxième et troisième électrovannes (214, 216) est dans un état excité ; la servocommande fonctionnant selon un mode dit "actif électrique" dans lequel les chambres du vérin sont mises en communication avec la servovalve (222), et dans lequel la servocommande est pilotée par l'intermédiaire de l'entrée de commande électrique (115a) lorsque la première électrovanne (212) est excitée et que les deuxième et troisième électrovannes (214, 216) sont désexcitées et la servocommande fonctionnant selon un mode dit "actif mécanique" dans lequel les chambres du vérin sont mises en communication avec la servovalve et dans lequel la servocommande est pilotée par l'intermédiaire de l'entrée de commande mécanique (115b), lorsque les première, deuxième et troisième électrovannes sont dans un état désexcité.

7. Dispositif selon la revendication 3, caractérisé en ce que chaque circuit hydraulique (128, 130, 132) comporte un système de pressurisation entraîné par au moins un propulseur.

8. Dispositif selon l'une des revendications 1 à 3, caractérisé en ce qu'il comporte au moins une servocommande (109) avec deux entrées de commande électrique (109a, 109b), ladite servocommande présentant une servovalve pilotée par la première entrée électrique et un système de génération hydraulique intégré piloté par la deuxième entrée électrique (109b).

9. Dispositif selon la revendication 8, caractérisé en ce qu'il comporte une servocommande mixte (114) et une servocommande (109) à deux entrées électriques, chaque servocommande étant alimentée par un circuit hydraulique (300, 302) qui lui est propre.

10. Dispositif selon la revendication 1, caractérisé en ce qu'il comporte une première servocommande à entrée électrique (110) reliée à un premier circuit hydraulique (128) associé à un premier propulseur, pour actionner la gouverne en cas de fonctionnement normal des propulseurs, une deuxième servocommande à entrée électrique (114) reliée à un deuxième circuit hydraulique (132) associée à un deuxième propulseur, et une troisième servocommande à entrée électrique de type hydrostatique avec un système de génération hydraulique intégré, au moins l'une des première et deuxième servocommandes étant des servocommandes mixtes comportant en outre une entrée de commande mécanique.

11. Procédé de pilotage d'un dispositif de commande de la gouverne de direction (116) d'un aéronef équipé d'au moins deux propulseurs, comprenant au moins deux servocommandes (110) à entrée électrique dont au moins l'une, dite servocommande mixte (114), comporte en outre une entrée de commande mécanique (115) et un système de pilotage électrique (127) des servocommandes, selon lequel, pour actionner la gouverne :
- on pilote électriquement l'une des servocommandes en cas de fonctionnement normal des propulseurs,
- on pilote électriquement et simultanément au moins deux servocommandes en état de fonctionner en cas de défaillance d'un propulseur, et
- on pilote mécaniquement la servocommande mixte (114) en cas de panne du système (127) de pilotage électrique des servocommandes.

## Claims

1. Device for the control of the rudder (116) of an aircraft equipped with at least two engines, having at least two servo-systems (110, 112, 114), each having at least one electric control input (11a, 113a, 115a), and an electric control system (127) for the servo-systems able to occupy a first state corresponding to a normal operation of the engines, in which at least one of the servo-systems operates the rudder, characterized in that at least one of the servo-systems (114), called the mix servo-system, also has a mechanical control input (115b) and in that the electric control system of the servo-systems is able to occupy a second state, corresponding to a failure of an engine, in which at least two of the servo-systems simultaneously operate the rudder (1160, and a third state corresponding to an electrical fault, in which the mixed servo-system (114), controlled from the mechanical control input, operates the rudder.

2. Device according to claim 1, characterized in that the electric control system (127) of the servo-systems comprises a computing unit (150, 152, 154) respectively associated with each servo-system (110, 112, 114).

3. Control device according to claim 2, characterized in that the servo-systems with an electric input (110, 112, 114) respectively have a hydraulic jack (111, 113, 115) with two chambers (210, 211), a servovalve (222) connected to a hydraulic circuit (128, 130, 132) for supplying to the chambers a hydraulic fluid flow, which is a function of an electrical command from the computing unit associated with the servo-system.

4. Device according to claim 3, characterized in that it incorporates three servo-systems with an electric input, whereof at least one is a mix servo-system.

5. Device according to claim 4, characterized in that the mix servo-system has a first solenoid valve (212) controlled by the computing unit (154) respectively associated therewith, the first solenoid valve being able to occupy an activated state corresponding to a so-called "electrically active" operating mode, in which the chambers (210, 211) of the jack are linked with the servovalve (222), and a deactivated state, the mix servo-system also having a second and a third solenoid valves (214, 216) respectively controlled by the computing units (150, 152) associated with the two other servo-systems of the device and each of which is able to alternately occupy an activated state and a deactivated state, the chambers of the jack (210, 211) of the mix servo-system being linked with one another in a so-called "damped" operating mode of the jack, when the first solenoid valve occupies a deactivated state and at least one of the second and third solenoid valves occupies an activated state, and the chambers of the jack of the mix servo-system are linked with a distributor (230) connected to the mechanical input (115b) of the servo-system in a so-called "mechanically active" operating mode, when the first (212), second (214) and third (216) solenoid valves occupy a deactivated state.

6. Device according to claim 4, characterized in that the mix servo-system has a first, a second and a third solenoid valves (212, 214, 216) respectively controlled by a computing unit (154) associated with said mixed servo-system (114) and by computing units (152, 150) associated with the two other servo-systems of the device, and each of which is able to alternately occupy an activated state and a deactivated state, the servo-system operating according to a so-called "damped" mode, in which the jack chambers (210, 211) are mutually connected, when at least one of the second and third solenoid valves (214, 216) is in an activated state, the servo-system operating according to a so-called "electrically active" mode, in which the jack chambers are linked with the servovalve (222) and in which the servo-system is controlled by means of the electric control input (115a) when the first solenoid valve (212) is activated and the second and third solenoid valves (214, 216) are deactivated and the servo-system operating according to a so-called "mechanically active" mode, in which the jack chambers are linked with the solenoid valve and in which the servo-system is controlled by means of the mechanical control input (115b), when the first, second and third solenoid valves are in a deactivate state.

7. Device according to claim 3, characterized in that each hydraulic circuit (128, 130, 132) has a pressurization system driven by at least one engine.

8. Device according to any one of the claims 1 to 3, characterized in that it has at least one servo-system (109) with two electric control inputs (109a, 109b), said servo-system having a servovalve controlled by the first electric input and an integrated, hydraulic generating system controlled by the second electric input.

9. Device according to claim 8, characterized in that it has a mixed servo-system (114) and a servo-system (109) with two electric inputs, each servo-system being supplied by its own hydraulic circuit (300, 302).

10. Device according to claim 1, characterized in that it has a first servo-system with an electric input (110) connected to a first hydraulic circuit (128) associated with a first engine, for operating the rudder in the case of the normal operation of the engines, a second servo-system with an electric input (114) connected to a second hydraulic circuit (132) associated with a second engine, and a third servo-system with an electric input of the hydrostatic type with an integrated, hydraulic generating system, at least one of the first and second servo-systems being mixed servo-systems also having a mechanical control input.

11. Process for the control of a control system of the rudder (116) of an aircraft equipped with at least two engines, comprising at least two servo-systems (110) having an electric control input, whereof at least one, called the mixed servo-system (114), also has a mechanical control input (115), and an electric control system (127) for the servo-systems, according to which, for operating the rudder:
- one of the servo-systems is electrically connected in the case of normal operation of the engines,
- at least two servo-systems in an operational state are electrically and simultaneously controlled in the case of a failure of an engine and
- the mixed servo-system (114) is mechanically controlled in the case of a failure of the electric control system (127) of the servo-systems.

## Patentansprüche

1. Vorrichtung zum Betrieb des Seitenruders (116) eines mit wenigstens zwei Triebwerken ausgerüsteten Flugzeugs, die wenigstens zwei Servobetätigungen (110, 112, 114) umfaßt, von denen jede wenigstens einen elektrischen Steuereingang (111a, 113a, 115a) und ein elektrisches Steuersystem (127) der Servobetätigungen umfaßt, das einen ersten, dem Normalbetrieb der Triebwerke entsprechenden Zustand aufweisen kann, in dem wenigstens eine der Servobetätigungen das Rinder bewegt,
**dadurch gekennzeichnet**,
daß wenigstens eine der Servobetätigungen (114), gemischte Servobetätigung genannt, auch einen mechanischen Betätigungseingang (115b) umfaßt, und dadurch, daß das elektrische Steuersystem der Servobetätigungen einen zweiten, einem Ausfall eines Triebwerks entsprechenden Zustand aufweisen kann, in dem wenigstens zwei der Servobetätigungen simultan das Rinder (116) bewegen, und einen dritten Zustand, in dem die gemischte Servobetätigung (114), gesteuert mittels des mechanischen Betätigungseingangs, das Ruder bewegt.

2. Vorrichtung nach Anspruch 1, dadurch gekennzeichnet, daß das elektrische Steuersystem (127) der Servobetätigungen eine jeweils mit jeder Servobetätigung (150, 152, 154) verbundene Recheneinheit (110, 112, 114) umfaßt.

3. Vorrichtung nach Anspruch 2, dadurch gekennzeichnet, daß die Servobetätigungen mit elektrischem Eingang (110, 112, 114) jeweils einen Hydraulikzylinder (111, 113, 115) mit zwei Kammern (210, 211) und ein Servoventil (222) umfassen, das mit einem Hydraulikkreis (128, 130, 132) verbunden ist, um den Kammern eine Hydraulikflüssigkeitsmenge in Abhängigkeit von einem elektrischen Befehl zu liefern, welcher von der der Servobetätigung zugeordneten Recheneinheit stammt.

4. Vorrichtung nach Anspruch 3, dadurch gekennzeichnet, daß sie drei Servobetätigungen mit elektrischem Eingang umfaßt, darunter wenigstens eine gemischte Servobetätigung.

5. Vorrichtung nach Anspruch 4, dadurch gekennzeichnet, daß die gemischte Servobetätigung ein erstes Elektroventil (212) umfaßt, gesteuert durch die Recheneinheit (154), mit der es verbunden ist, wobei das erste Elektroventil einen erregten Zustand, der einer sogenannten "elektrisch aktiven" Betriebsart entspricht, in der die Kammern (210, 211) des Zylinders (115) mit dem Servoventil (222) verbunden sind, und einen entregten Zustand aufweisen kann, und die gemischte Servobetätigung auch ein zweites und drittes Elektroventil (214, 216) umfaßt, jeweils durch die den beiden anderen Servobetätigungen der Vorrichtung zugeordneten Recheneinheiten (150, 152) gesteuert und jede fähig, abwechselnd einen erregten Zustand und einen entregten Zustand aufzuweisen, wobei die Kammern des Zylinders (210, 211) der gemischten Servobetätigung in einer sogenannten "gedämpften" Betriebsart miteinander kommunizieren, wenn das erste Elektroventil einen entregten Zustand aufweist und von dem zweiten und dritten Elektroventil wenigstens eines einen erregten Zustand aufweist und die Kammern des Zylinders der gemischten Servobetätigung in einer "mechanisch aktiv" genannten Betriebsart mit einem mit dem mechanischen Eingang (115b) der Servobetätigung verbundenen Verteiler (230) verbunden sind, wenn das erste (212), zweite (214) und dritte (216) Elektroventil einen entregten Zustand aufweisen.

6. Vorrichtung nach Anspruch 4, dadurch gekennzeichnet, daß die gemischte Servobetätigung ein erstes, zweitens und drittes Elektroventil (212, 214, 216) umfaßt, jeweils gesteuert durch eine der genannten gemischten Servobetätigung (114) zugeordneten Recheneinheit (154) und durch den beiden anderen Servobetätigungen der Vorrichtung zugeordnete Recheneinheiten (152, 150), von denen jedes abwechselnd einen erregten Zustand und einen entregten Zustand aufweisen kann, wobei die Servobetätigung entsprechend einem "gedämpft" genannten Modus arbeiten kann, in dem die Kammern (210, 211) des Zylinders miteinander kommunizieren, wenn wenigstens das zweite oder das dritte Elektroventil (214, 216) einen erregten Zustand aufweist; dabei arbeitet die Servobetätigung entsprechend einem sogenannten "elektrisch aktiven" Zustand, in dem die Kammern des Zylinders mit dem Servoventil (222) verbunden sind und in dem die Servobetätigung mittels des elektrischen Steuereingangs (115a) gesteuert wird, wenn das erste Elektroventil (212) erregt ist und das zweite und dritte Elektroventil (214, 216) entregt sind und die Servobetätigung mittels des mechanischen Steuereingangs (115b) gesteuert wird, wenn das erste, zweite und dritte Elektroventil in einem entregten Zustand sind.

7. Vorrichtung nach Anspruch 3, dadurch gekennzeichnet, daß jeder Hydraulikkreis (128, 130, 132) ein durch wenigstens einen Antrieb bzw. ein Triebwerk angetriebenes Drucksystem umfaßt.

8. Vorrichtung nach Anspruch 1, dadurch gekennzeichnet, daß sie wenigstens eine Servobetätigung (109) mit zwei elektrischen Steuereingängen (109a, 109b) umfaßt, wobei die genannte Servobetätigung ein durch den ersten elektrischen Eingang gesteuertes Servoventil und ein integriertes Hydraulik-Erzeugungssystem umfaßt, gesteuert durch den zweiten elektrischen Eingang (109b).

9. Vorrichtung nach Anspruch 8, dadurch gekennzeichnet, daß sie eine gemischte Servobetätigung (114) und eine Servobetätigung (109) mit zwei elektrischen Eingängen umfaßt, wobei jede Servobetätigung durch einen eigenen Hydraulikkreis (300, 302) versorgt wird.

10. Vorrichtung nach Anspruch 1, dadurch gekennzeichnet, daß sie eine erste Servobetätigung mit elektrischem Eingang (110) umfaßt, verbunden mit einem einem ersten Triebwerk zugeordneten ersten Hydraulikkreis, um das Ruder im Normalbetriebsfall der Triebwerke zu bewegen, eine zweite Servobetätigung mit elektrischem Eingang (114), verbunden mit einem einem zweiten Triebwerk zugeordneten zweiten Hydraulikkreis und eine dritte Servobetätigung mit elektrischem Eingang des hydrostatischen Typs mit einem integrierten Hydraulik-Erzeugungssystem umfaßt, wobei von der ersten und zweiten Servobetätigung wenigstens eine eine gemischte Servobetätigung ist und zusätzlich einen mechanischen Steuereingang hat.

11. Verfahren zum Steuern einer Betätigungsvorrichtung des Seitenruders (116) eines mit wenigstens zwei Triebwerken ausgerüsteten Flugzeugs, wenigstens zwei Servobetätigungen (110) mit elektrischem Eingang umfassend, von denen wenigstens die eine, gemischte Servobetätigung (114) genannt, außerdem einen mechanischen Betätigungseingang (115) und ein elektrisches Steuersystem (127) der Servobetätigungen umfaßt, nach dem, um das Rinder zu bewegen:
- man im Normalbetriebsfall des Triebwerks eine der Servobetätigungen elektrisch steuert,
- man wenigstens zwei Servobetätigungen, imstande im Falle des Ausfalls eines Triebwerks zu funktionieren, elektrisch und simultan steuert, und
- man die gemischte Servobetätigung (114) im Falle eines Ausfalls des elektrischen Steuersystems (127) der Servobetätigungen mechanisch steuert.
